# EUROPEAN PATENT APPLICATION

(11) **EP 1 295 659 A2**
(43) Date of publication of application: **26.03.2003**
(21) Application number: 02020520.9
(22) Date of filing: 13.09.2002
(51) Int. Cl.: B23B 5/16

(54) **Apparatus particularly for preparing the outer surface of the end region of pipes made of plastics**

(30) Priority: 20.09.2001 IT PD20010087 U
(71) Applicant: RITMO S.p.A., 35037 Teolo (Padova) (IT)
(72) Inventor: Bortoli, Renzo, 35038 Torreglia (Padova) (IT)
(74) Representative: Modiano, Guido, Dr.-Ing.

(57) **Abstract**

An improved apparatus, particularly for preparing the outer surface of the end region of pipes made of plastics, that comprises anchoring means, which are fixed, in the functional configuration, to the end region of the pipe, and to which an axial threaded pin is movably coupled so that it is constrained to perform a longitudinal rotary and translational motion, supporting means for supporting at least one tool being coupled to the pin so as to rotate rigidly therewith, the tool being arrangeable so as to interfere, removing material, with the outer surface of the end region of the pipe. The apparatus is characterized in that the anchoring means comprise an annular coupling element for first ends of first-class lever systems that are arranged at least partially radially and are angularly equidistant and support, so that they are articulated substantially in a rocker-like fashion to second ends, elements for resting on the inner wall of a pipe. The coupling element is adjustably movable along a tubular supporting element with which the threaded pin engages internally, a disk protruding from the supporting element, the lever systems being pivoted to the disk and being therefore articulated so as to modify their inclination with respect to the axis and keep the elements pushed against the pipe wall.

## Description

The present invention relates to an apparatus that is particularly but not exclusively useful for preparing the outer surface of the end region of pipes made of plastics.

Currently, joining units that join adjacent portions of pipes made of plastics by heat-sealing are becoming increasingly widespread.

These joining units are substantially constituted by a collar, which surrounds the end regions of a pair of mutually aligned thermoplastic pipes.

An electric resistor is inserted in the inner part of the joining unit.

By passing electric current through said resistor, the end portions of the pipes fuse together.

Field practice, however, has shown that to provide an optimum joint it is necessary to clean the ends of the pipes to be heat-sealed before applying the joining unit.

The cleaning of the ends relates to the elimination of mud, moisture and sand but also to the removal of the light layer of oxide that inevitably forms on the outer surface of pipes made of plastics, and to the correction of any flatness and inclination errors with respect to the axis of symmetry.

The end parts of the pipes to be joined were originally cleaned mostly manually.

However, manual execution entailed various drawbacks, including the one related to the fact that a human operator had to evaluate arbitrarily the amount of material that he was removing, and this is extremely difficult to do at the installation site.

Moreover, manual removal of the material was never uniform and could lead to uneven diameters of the end regions of the pipes to be heat-sealed.

Moreover, manual removal was time-consuming and ultimately expensive in terms of treatment times.

In order to eliminate these drawbacks, many kinds of apparatus have been devised which are suitable to eliminate a layer of material, and therefore prepare the end part of the pipes to be heat-sealed, substantially semiautomatically or automatically.

One of these devices is described in Italian utility model patent no. 239118 in the name of the same Applicant.

This apparatus comprises anchoring means, which are fixed, in the functional configuration, to the end region of the pipe and to which a threaded pin arranged axially with respect to the pipe is movably coupled so as to be constrained to perform a longitudinal rotary and translational motion, supporting means being coupled to such pin so as to rotate rigidly therewith; the supporting means support a tool that can be positioned so as to interfere, removing material, with the outer surface of the end region of the pipe.

The anchoring means comprise a substantially cylindrical element, which is shaped at one end so as to form a circumferential recess and is shaped at the other end so as to form radial guides for elements for anchoring to the pipe.

The supporting means comprise a first telescopic rod-like arm, which is fixed radially at one end to the free end of the threaded pin, and a second rod-like arm, which is fixed at one end to the free end of the first arm and supports the tool.

Although this apparatus currently in use achieves its purpose and substantially improves the quality and time requirements of the process with respect to preparation performed manually, it has been found to have drawbacks.

The main drawbacks are essentially reduced functionality with reference to the diameters of the pipes that can be processed, owing to the dimensional constraints between the substantially cylindrical element and the radial guides (the diameter of the former limits the maximum length of the radial guides and therefore the maximum pipe diameter to which anchoring is possible).

Moreover, the inclination of such apparatus cannot be adapted with respect to the axis of symmetry of the pipe.

The aim of the present invention is to provide an improved apparatus that solves the drawbacks mentioned above and exhibited by known apparatuses and is functionally more flexible.

Within this aim, an object of the present invention is to provide an apparatus that combines considerable constructive simplicity with equally considerable smoothness and speed of execution of the operation for preparing the outer surface of the pipes.

Another object of the present invention is to provide an apparatus that can be fitted rapidly to the end of a pipe, minimizing preparation and adjustment times.

Another object of the present invention is to provide an apparatus whose operation does not require specialized personnel.

Another object of the present invention is to provide an apparatus whose process quality is better than that of known models and can be manufactured with known technologies and at costs that are competitive with respect to the costs of known devices.

This aim, these objects and others that will become better apparent hereinafter are achieved by an apparatus, particularly for preparing the outer surface of the end region of pipes made of plastics, comprising anchoring means, which are fixed, in a functional configuration, to an end region of a pipe, and to which an axial threaded pin is movably coupled so that it is constrained to perform a longitudinal rotary and translational motion, supporting means for supporting at least one tool being coupled to said pin so as to rotate rigidly therewith, said tool being arrangeable so as to interfere, removing material, with an outer surface of the end region of the pipe, characterized in that said anchoring means comprise an annular coupling element for first ends of first-class lever systems that are arranged at least partially radially and are angularly equidistant and support, so that they are articulated substantially in a rocker-like fashion to second ends, elements for resting on an inner wall of the pipe, said coupling element being adjustably movable along a tubular supporting element with which said threaded pin engages internally, a disk protruding from said supporting element, said lever systems being pivoted to said disk and being therefore articulated so as to modify their inclination with respect to an axis of simmetry and keep said elements pushed against said pipe wall.

Further characteristics and advantages of the present invention will become better apparent from the description of an embodiment thereof, illustrated only by way of non-limitative example in the accompanying drawings, wherein:

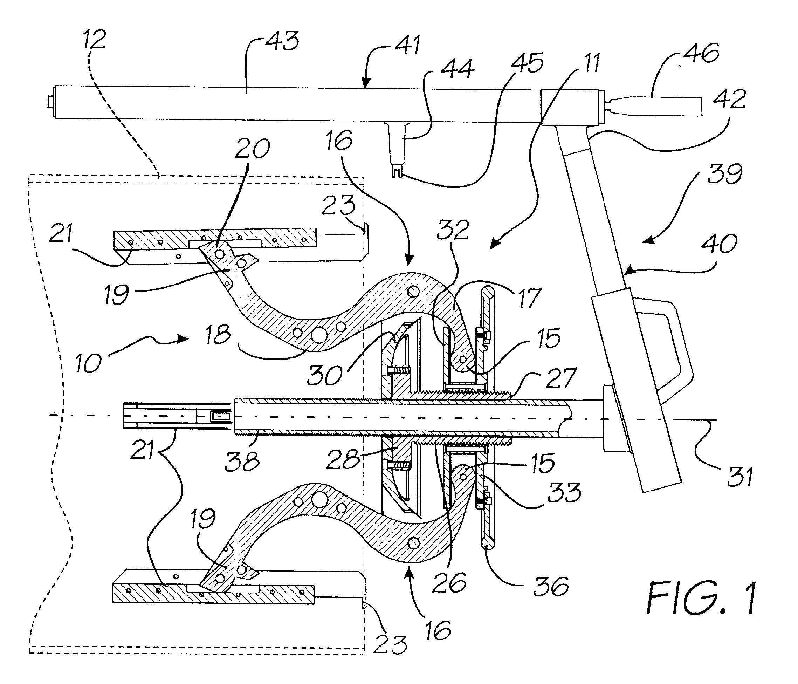

Figure 1 is a sectional view of an apparatus according to the invention during application to a pipe;

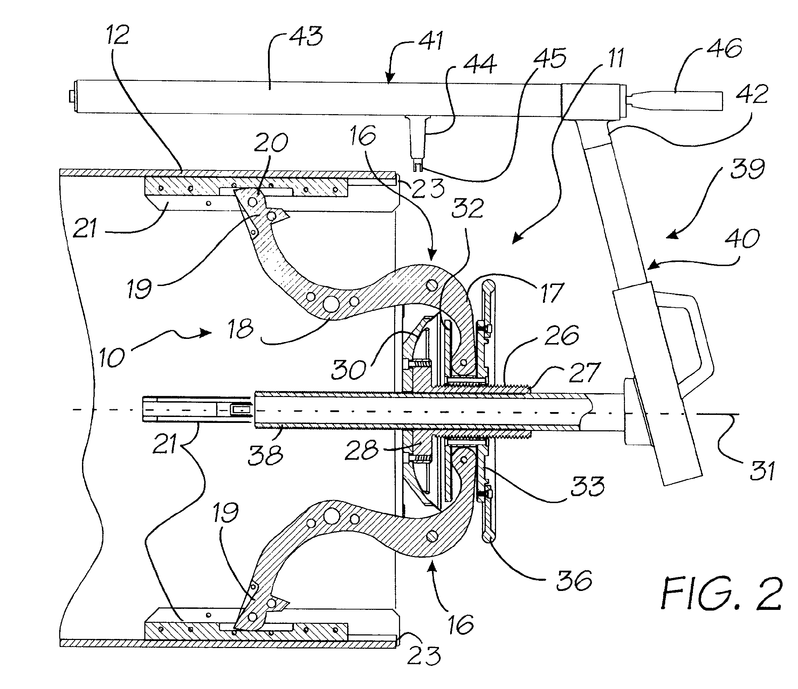

Figure 2 is a sectional view of the apparatus of Figure 1, ready for use;

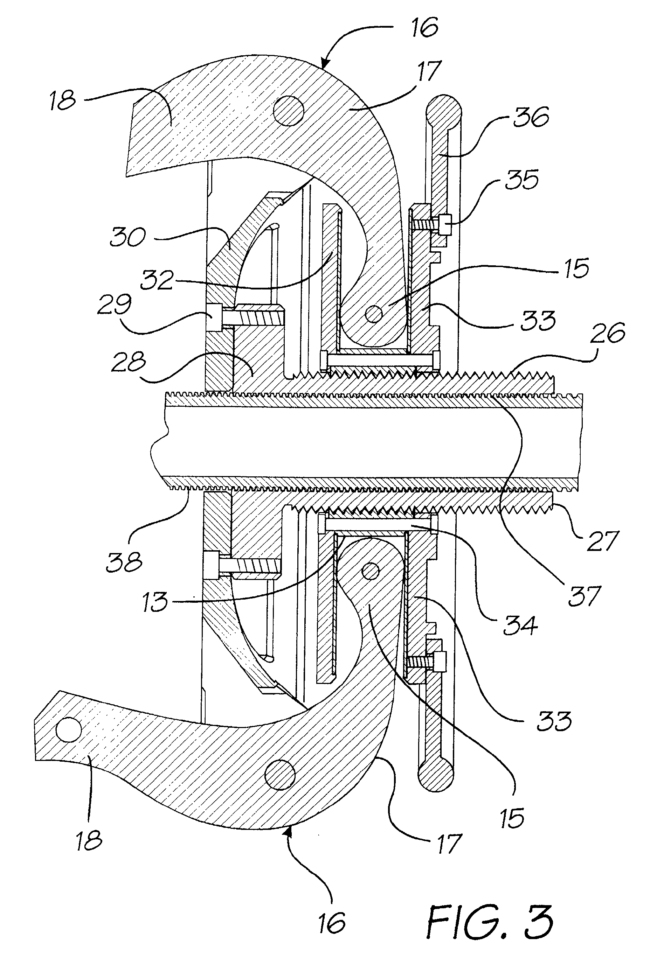

Figure 3 is an enlarged-scale sectional view of a detail of the apparatus of Figure 1.

With reference to the above cited figures, an apparatus, particularly for preparing the outer surface of the end region of pipes made of plastics, according to the invention, is generally designated by the reference numeral 10.

The apparatus 10 comprises anchoring means, generally designated by the reference numeral 11, which are fixed, in the functional configuration, to the end region of a pipe 12 and comprise a substantially sleeve-like element 13 for the coupling of first ends 15 having a circular profile of shaped first-class lever systems 16 that are angularly equidistant and are constituted in practice by levers with a substantially radial first portion 17, a substantially axial second portion 18, and a substantially radial third portion 19.

A rod-like element 21 for resting on the inner wall of the pipe 12 is articulated to each lever 16 at a second end 20 that lies opposite the first end 15, substantially in a rocker-like fashion.

Each element 21 ends with a raised edge 23 for retaining the end 24 of the pipe 12.

The retention element 13 has an internal thread (not clearly visible in the figures), which meshes with an external thread 26 of a tubular supporting element 27 that has, at its end, a flange 28 to which a bell-shaped disk 30 is rigidly coupled by virtue of screws 29; the lever systems 16 are pivoted, and therefore articulated, to such disk in order to modify their inclination with respect to the axis of symmetry 31 and keep the resting elements 21 pushed against such wall of the pipe 12.

The first ends 15 of the lever systems 16 are arranged between two disks, designated by the reference numerals 32 and 33 respectively; the first disk is internal and does not interfere with the disk 30, and the disks are packed and fixed by means of bolts 34 to the heads of the sleeve element 13.

The second disk 33, which lies opposite the disk 30, has an actuation handwheel 36 that is fixed thereto by virtue of screws 35 and is available to the user.

In practice, the element 13 acts as a carriage for movement with respect to the support 27 in order to vary the configuration of the lever systems 16 by varying the configuration of their articulation to the disk 30.

The first ends 15 having a circular profile of the lever systems 16, by virtue of their circular shaping, offer minimum friction to the axial movement of the element 13, leading to their radial movement.

The support 27 has an internal thread 37 with which a threaded pin 38 engages.

The apparatus 10 further comprises supporting means, generally designated by the reference numeral 39, which are suitable to support in a per se known manner a tool that can be arranged so as to interfere with the outer surface of the end region of the pipe 12 and remove material.

The supporting means 39 comprise a first telescopic rod-like arm 40, which has a substantially rectangular cross-section and is fixed, with a substantially radial orientation with respect to the element 27, to the free end of the threaded pin 38.

The supporting means 39 further comprise a second rod-like arm 41, which has a substantially rectangular cross-section and has an end 42 that is rigidly coupled to the free end of the first rod-like element 39 and an actuation knob 46.

The other end 43 of the second rod-like arm 41 has means 44 for supporting a tool 45 which are rigidly coupled thereto and are arranged substantially radially with respect to the pipe 22.

In practice, operation is as follows: the apparatus 10 is arranged at an end of the pipe 12 whose outer surface is to be processed.

The elements 21 are inserted in the hole of the pipe 12, up to the stop elements constituted by the raised portions 23, and by virtue of the action of the handwheel 36 the configuration of the lever systems 16 is changed until they produce the anchoring thrust on the elements 21.

The operator then adjusts the length of the first rod-like arm 40 of the means 39, and therefore ultimately of the tool 45, according to the diameter of the pipe 12.

Then the operator, by acting on the knob 46, turns the second rod-like arm 41, performing the actual process.

The rotation of the second rod-like arm 41 is rigidly associated with the rotation of the threaded pin 38, which performs a combined rotary and translational motion, causing the advancement of the first rod-like arm 40 and therefore of the process.

In practice it has been found that the intended aim and objects have been achieved.

In particular, it should be noted that the present invention allows anchoring even to pipes that have a particularly large diameter and in any case a larger diameter than allowed with known equipment.

Moreover, the invention is constructively simple and can be used by non-specialized labor rapidly and easily.

Attention is also called to the ease of application to the pipe and to the safety of the anchoring of the apparatus according to the invention.

The materials and the dimensions may be any according to the requirements.

The disclosures in Italian Utility Model Application No. PD2001U000087 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus, for preparing the outer surface of the end region of pipes made of plastics, comprising anchoring means, which are fixed, in a functional configuration, to an end region of a pipe, and to which an axial threaded pin is movably coupled so that it is constrained to perform a longitudinal rotary and translational motion, supporting means for supporting at least one tool being coupled to said pin so as to rotate rigidly therewith, said tool being arrangeable so as to interfere, removing material, with an outer surface of an end region of the pipe, **characterized in that** said anchoring means comprise an annular coupling element for first ends of first-class lever systems that are arranged at least partially radially and are angularly equidistant and support, so that they are articulated substantially in a rocker-like fashion to second ends, elements for resting on the inner wall of a pipe, said coupling element being adjustably movable along a tubular supporting element with which said threaded pin engages internally, a disk protruding from said supporting element, said lever systems being pivoted to said disk and being therefore articulated so as to modify their inclination with respect to an axis of simmetry and keep said elements pushed against said pipe wall.

2. The apparatus according to claim 1, **characterized in that** said coupling element is substantially sleeve-like and said first ends of said lever systems are arranged between two disks that are packed and fixed by means of bolts to the heads of said coupling element, one of said disks, arranged opposite said disk to which said lever systems are pivoted, having an actuation handwheel that is fixed thereto by virtue of screws and is available to the user.

3. The apparatus according to claim 1, **characterized in that** said first ends of said lever systems have a circular profile.

4. The apparatus according to claim 2, **characterized in that** each one of said lever systems has a first substantially radially orientated portion, a second substantially axially orientated portion and a third substantially radially orientated portion.

5. The apparatus according to claim 1, **characterized in that** each element for resting against the inner wall of the pipe ends with a raised edge for retaining the end of the pipe.

6. The apparatus according to claim 1, **characterized in that** said sleeve-like coupling element is provided with an internal thread that is coupled to an outer thread of said tubular supporting element.

7. The apparatus according to claim 1, **characterized in that** said tubular supporting element has, at an end thereof, a flange to which said disk is rigidly coupled by means of screws, said lever systems being pivoted to said disk, said disk being bell-shaped.
